# EUROPEAN PATENT SPECIFICATION

(11) **EP 0 854 784 B1**
(45) Date of publication and mention of the grant of the patent: **12.12.2001**
(21) Application number: 96932740.2
(22) Date of filing: 09.10.1996
(51) Int. Cl.: B29D 11/00, B29C 71/00

(54) **CLEANING PROCESS**
REINIGUNGSVERFAHREN
PROCEDE DE NETTOYAGE

(30) Priority: 10.10.1995 GB 9520722
(43) Date of publication of application: 29.07.1998
(73) Proprietor: Award PLC, London EC4A 1NH (GB)
(72) Inventor: HAMILTON, Ronald, Shade, Livingston EH54 8SZ (GB)
(74) Representative: Newell, Campbell
(86) International application number: GB9602467
(87) International publication number: WO9713635

(56) References cited:
- EP-A- 0 453 231
- EP-A- 0 453 232
- GB-A- 2 226 272
- GB-A- 2 237 240
- US-A- 3 115 146
- US-A- 3 168 100

## Description

The present invention relates to a method and apparatus for the hydration and cleaning of hydrophillic moulded products such as contact lenses but not exclusively.

Cast moulding is a known method for the production of contact lenses. During the conventional process of cast moulding of a lens product, the product requires to be handled and transferred between a number of different containers as it undergoes moulding, inspection, power measurement; washing/extraction; hydration and transfer to the final packaging. Such methods carry a very high risk of damage to the lens product associated with the repeated handling. United Kingdom Patent numbers GB 2226272B, GB 2237240B and GB 2237241B (all in the name of the British Technology Group Ltd.) disclose a method of contact lens cast moulding and packaging in which these operations can be carried out in part of the mould which is also used as a main component of the final packaging.

The processes and methods disclosed in the abovementioned publications whilst reducing at least some of the abovementioned difficulties of conventional cast moulding, also have their own disadvantages. In particular the lens product requires to be retained on one specific mould surface, i.e. the male or female surface, and the mould must be designed in such a way as to bias the retention forces in favour of the desired mould surface e.g. by applying different surface finishes to each mould surface or by selective flame polishing so as to impart surface energy differences to the respective mould surfaces. Product or process requirements may be such that such features cannot be incorporated or controlled. Moreover processes such as flame polishing can be expensive and in any event there can be no guarantee that the lens product will be retained with absolute certainty on the required surface for hydration and further processing. Indeed hydrating a lens held on a flame polished mould surface can take 1 to 3 hours compared to 15 to 25 minutes if the mould surface is not flame polished.

Furthermore the mould portions in which the lens product is retained are generally too small to contain sufficient volumes of hydration and washing/extraction fluids to complete these processing steps. Any attempt to compensate for this would require comparatively large and therefore expensive moulds. The use of small mould portions requires hydration and washing/extraction to be undertaken by repeated filling and emptying of the mould piece but this can be time consuming, expensive and difficult to control particularly where very high production volumes are required.

Developments in the marketing and use of soft contact lens products means that users no longer wish to have the inconvenience of caring for their contact lenses and thus there is a move away from medium use wear lenses to disposable one-day single use lens products. In order to achieve the very low unit cost required for these lenses, processes which are normally cost effective for conventional extended wear lenses become significantly less cost effective for one-day wear lenses. For such one-day single use disposable lenses it is desirable to use high water content materials such as for example polymerized vinylpyrrolidone which typically has a water content of approximately 73%. Nevertheless there could also be used medium water content hydrophillic materials such as polymerized HEMA (hydroxyethylmethacrylate) having a water content of approximately 38%.

It has been found though that after in-situ hydration of lenses, made from certain materials, unpolymerised monomers, which may be deleterious to a user's eye, can leach out of the hydrated lens and thus it is desirable to remove the fluid of hydration and to wash vigorously the lens and replace the hydration fluid with for example a saline solution. Conventional lens cleaning processes use very large volumes of water (e.g. up to 8 litres per lens) or other suitable cleaning liquids to clean a lens and a significant disadvantage of the method disclosed in GB 2226272B is that the relatively small size of the lens packaging (mould portion) means that it may not be possible to remove, to a sufficient degree, any unpolymerised monomers or other contaminants on the lens product; in contact with the lens packaging; or in the packaging solution, without removing the lens from the mould and immersing it in a large body of cleaning fluid. GB 2226272B also discloses introducing a saline hydrating solution through a port in the mould and exhausting the hydrating solution though another port while the mould is tilted.
This arrangement on the one hand though is not suitable to give the required degree of flushing and intensive cleaning of the hydration fluid because the ports can become blocked with excess lens polymer (as a result of polymerisation of any monomer that may have been introduced thereinto) and on the other hand the requirement to individually or "batch" process lenses is simply not practicable for very large continuous process production volumes e.g. 100,000 plus lenses per day. Also the cavity profile of the mould can allow for the presence of air pockets or air bubbles which restrict or prevent hydration.

It is an object of the present invention to avoid or minimise one or more of the foregoing disadvantages.

The present invention provides a method for the hydration and cleaning of hydrophillic moulded products, such as contact lenses, moulded between at least two mould portions, with hydration fluid and the removal of said hydration fluid therefrom which method comprises the steps of:-- providing a moulded product held in between the mould surfaces of said at least two mould portions;
- separating said at least two mould portions so that said product is held on the mould surface of one of said at least two mould portions;
- providing support means formed and arranged for supporting said at least two mould portions in spaced apart opposed proximity relative to each other so as to captively contain a said product in a product holding space defined therebetween and to define a fluid passage means therebetween for substantially unobstructed flow of fluid through said product holding space;
- introducing hydration fluid into said product holding space so as to hydrate said moulded product, the hydrated product being captively retained in said product holding space; and
- introducing cleaning fluid into said product holding space so as to substantially flush said product holding space and said moulded product of said hydration fluid and any contanimants contained therein.

Thus with a method according to the present invention contact lenses and other such moulded products may be hydrated and intensively cleaned without the need for handling of the individual products thereby substantially avoiding the risk of damage thereto, whilst also permitting the use of one of the mould portions to form at least part of the packaging for the product.

Generally moulding is carried out using two mould portions, a first mould portion having a male mould surface and a second mould portion having a female mould surface.

Preferably said steps of introducing hydration fluid and then introducing cleaning fluid are performed simultaneously, said hydration fluid being also said cleaning fluid. Said hydration/cleaning fluid may be a saline solution though preferably is tap-water or purified tap-water.

Preferably, each of said mould portions has a base on which the respective mould surface is formed and an annular wall extending away from the base, the annular walls of the first and second mould portions being formed and arranged to engage each other as a sliding fit whereby the two mould portions may be moved as a piston and cylinder device to open and close the mould. The annular wall of each of said first and second mould portions is formed with a flange portion at its upper end, each said flange being formed and arranged for engagement with said support means for support of the respective mould portions. Desirably the flange on the first mould portion having said male mould surface is formed and arranged to be sealed over by a sealing cover.

Preferably, the male mould surface is formed on the base of said first mould portion spaced inwardly from the annular wall of the first mould part so as to provide a trough within the annular wall surrounding said male mould surface whereby the sealing cover may be sealed onto said flange after formation, hydration and cleaning of the lens so that the lens is supported on the male mould surface below said cover.

Conveniently the method of moulding said moulded product held in between said mould surfaces is a method as disclosed in United Kingdom Patent No. GB 2226272B in the name of the British Technology Group Ltd.

Preferably said method according to the present invention includes an additional step, following separation of said at least two mould portions, of removing any flashing between said mould portions, prior to supporting said mould portions on said support means.

In practice it has been found that a said moulded product in the form of a contact lens hydrated according to the method of the invention almost invariably hydrates from the female mould portion towards the male mould portion. Thus it is possible instead of supporting the respective male and female mould portions so as to hydrate from the female portion onto the male mould surface and then to package the hydrated and cleansed moulded product in the male mould portion, to support the female mould portions on top of the other female mould portions and to hydrate a moulded product e.g. a contact lens from the female mould surface onto the back of another female mould portion and then to package the hydrated and cleansed moulded product in the female mould portion according to the packaging process described in UK Patent Application No GB 2237241A. The use of the female mould portion for packaging purposes is preferred because it allows for significantly improved packaging density to be achieved on the support means and in the final packaged product.

In another aspect, the present invention provides a mould support means for use in a method as hereinbefore described, which mould support means comprises at least one support member formed and arranged for supporting at least two mould portions,in spaced apart opposed proximity relative to each other so as to captively contain a moulded product in a product holding space defined between said mould portions so supported. Preferably said annular walls of said first and second mould portions are substantially in register with each other in said spaced apart opposed proximity relative to each other. The spacing apart of the mould portions will depend on inter alia the size and shape of the moulded product captively contained therein, though generally said spacing apart of the first and second mould portions as measured from the underside of the base of a second mould portion to the top surface or flange portion of the first mould portion may be such as to define a substantially unobstructed flow passage between the mould portions of the order of 0.25mm to 10mm desirably 1mm to 5mm, though of course larger spacings may be used for larger products. Preferably for use with contact lenses the mould portions are spaced apart by a space of at least 0.25mm desirably 0.5mm. Alternatively where at least the base of the second mould portion is of a smaller diameter than at least the top end of the first mould portion or are for example frustoconical and thus spaced apart therefrom, the underside of the base of said second mould portion may be co-planar with said top surface or flange portion on said first mould portion such that the gap therebetween defines a fluid passage means for substantially unobstructed flow of fluid through said product holding space.

As the first and second mould portions are preferably circular, said support member is preferably in the form of a tray having a plurality of spaced apart apertures formed and arranged for receiving a plurality of sets of said mould portions. From 10 to 20 sets of mould portions, desirably about 15 sets of mould portions, may conveniently be supported by a single support member.

Advantageously a plurality of said support members are used for supporting a multiplicity of sets of moulds, conveniently from 500 to 1500, for example about 1000 mould sets and lenses contained therein, said support members being formed and arranged so as to be stackable one on top of another and in side-by-side arrangement within a support cage so as to facilitate the handling of said mutliplicity of mould sets and lenses. Said plurality of support members are also desirably formed and arranged so that when loaded with said sets of mould portions in said support cage, they define a plurality of substantially unobstructed fluid passage means between and around said mould portions and said support means. A particular advantage of the foregoing arrangement is that a multiplicity of lens products may be retained in between the mould portions regardless of the orientation of the support cage, the support members and the mould portions. Further advantageously the foregoing arrangement facilitates the immersion of a multiplicity of products into a body of hydration fluid and thereafter into a body of cleaning fluid and for said support cage to be rotated and displaced in any desired direction in said body of fluid so as to remove and substantially eliminate any pockets of air or air bubbles contained in said product holding spaces which may interfere with the hydration or cleaning process.

Preferably the upper surface of a said support member is substantially planar whilst the underside surface of advantageously has a castellated surface arrangement which when placed on the upper surface of another said support member defines a plurality of fluid conduits formed and arranged to allow a substantially unobstructed flow of fluid into the product holding spaces defined between opposed mould portions supported therein. Preferably the surface contact area between said upper surface of a support member and the underside surface of a second support member supported thereon is restricted to for example 70% of the surface area of the upper surface so as to facilitate the separation of support members which might otherwise be impeded due to the effects of surface tension making the support members "stick" together. Desirably though the areas of surface contact between said mould portions and said support member are formed and arranged so as to hold the mould portions to the support member for handling purposes but also to allow the mould portions to be readily separable from the support member for lens production purposes.

There may also be provided a base support means for supporting the first lowest level of mould portions in a stack of support members. In order to prevent said lower male mould portions lifting away from a support surface as the female mould portions in spaced apart opposed proximity thereto are removed, said base support means may be formed and arranged for holding said male mould portions thereto for example in elongate slotted tracks. For manufacturing purposes it is desirable to have all the support members identical. Alternatively though there may be provided a support surface having a vacuum box thereunder to prevent said male mould portions lifting off the support surface.

It will be appreciated that the present invention is not restricted to the production of contact lens and may be applicable to the production of other hydrophillic products.

Further preferred features and advantages of the present invention will appear from the following detailed description given by way of example of a preferred embodiment illustrated with reference to the accompanying drawings in which:-
Fig. 1 is a detail cross sectional view of a stack of support members supporting mould portions, for use in accordance with the present invention;
Fig. 2 is an underside plan view of a support member for use in Fig. 1;
Fig. 3 is a side view of the support member shown in Fig. 2;
Fig. 4 is a side view of a stack of support members arranged in a cage for use in accordance with the present invention;
Fig. 5 is a side view of a second embodiment of the cage shown in Fig. 4; and
Fig. 6 is a detailed side view showing the arrangement of support members in a cage.

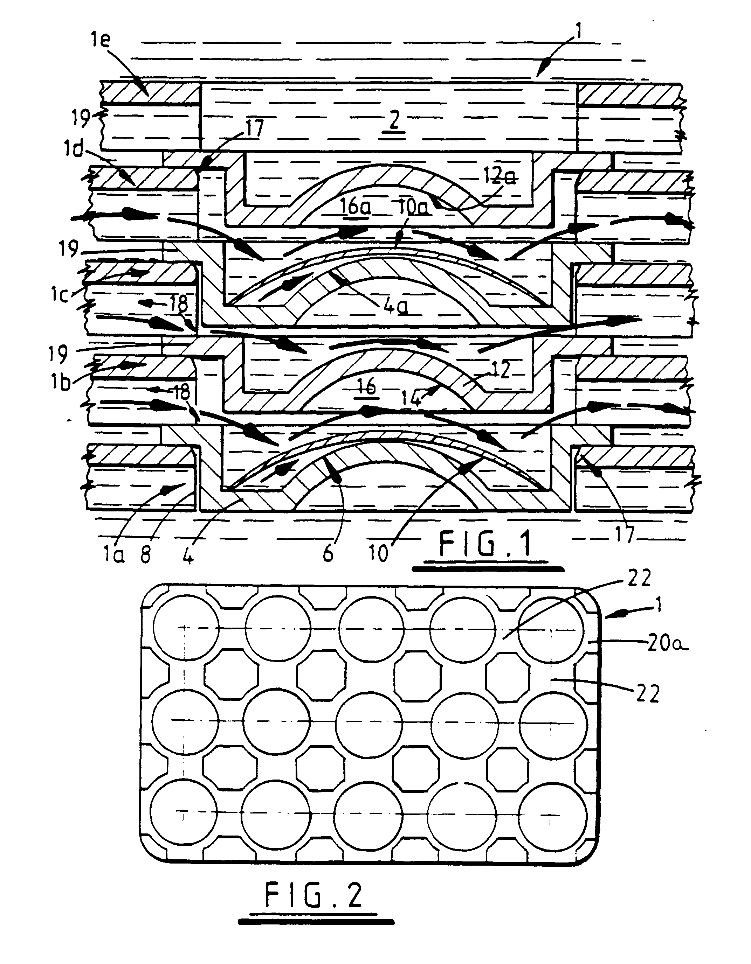

A stack of support members in the form of small pallets, as shown in Fig. 1 and generally indicated by reference number 1, is formed by stacking several support pallets one on top of each other in a body of cleansing liquid 2. The base support pallet 1a supports in an aperture 8 a male mould portion 4 having a male mould surface 6 on which sits an hydrated contact lens 10. On top on the base support a second support pallet 1b supports a female mould portion 12 having a female mould surface 14.

The second support pallet 1b is arranged with the base support bracket 1a for supporting the male mould portion 4 in spaced apart opposed proximity to the female mould portion 12 so as to captively contain the hydrated contact lens 10 in a product holding cavity 16 defined between the mould portions 4, 12.

The male 4 and female 12 mould portion are spaced apart sufficiently for cleansing liquid 2 and shown by enlarged arrows to pass through apertures 18 in the support pallets 1 into the product holding cavity 16 and thus to displace and flush out any fluid of hydration and any contaminant which may have leached into the hydration fluid.

A third support pallet 1c supports a second male mould portion 4a and a fourth support pallet 1d supports a second female mould portion 12a in spaced apart opposed proximity to the second male portion 4a so as to captively contain a second hydrated contact lens 10a in a second product holding cavity 16a defined between the mould portion 4a, 12a.

A fifth support pallet le holds the second female portion 12a in spaced apart proximity relative to the second male portion 4a. Each of the generally annular mould portions 4, 12, has a flange 19 at its upper end for engagement between the plane and castellated surfaces of two stacked pallets. The aperture 8 in the pallets 1 a, b, c, d, e has a relief chamfer 17 to allow the mould flanges to sit flush with the surface of the pallet 1 and to prevent the mould portions "sticking" in the aperture.

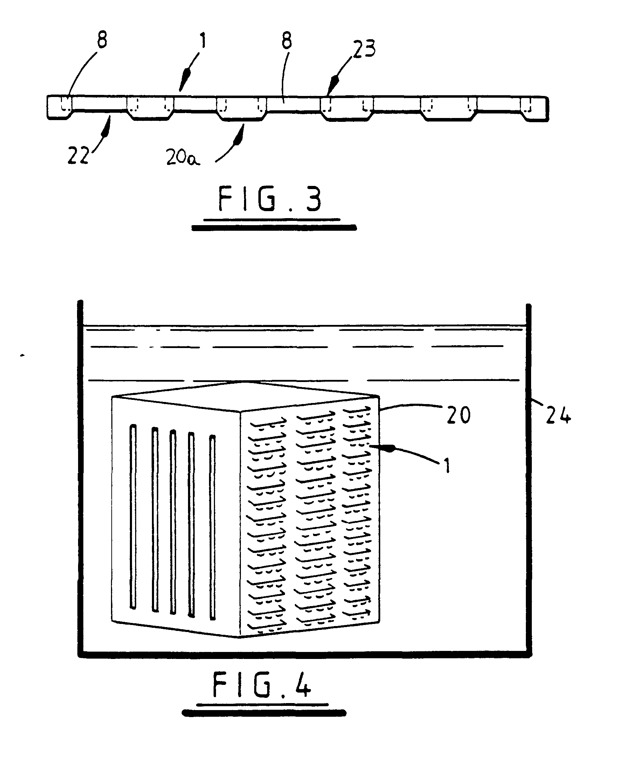

Fig. 2 shows in more detail the castellated underside 20a of a support pallet 1 and the channels 22 in the underside which when stacked on top of the plain surface 23 of another support pallet 1 define apertures or conduits 18 through which substantial volumes of cleansing liquid may pass more or less uninterrupted so as to cleanse and flush the contact lens 10 products. The underside 20a of the support pallet (see also the side view in Fig. 3) is castellated between the apertures 8 for holding the mould portions 4, 12, and so as to prevent two adjacent pallets sticking together due to the effects of surface tension in the hydration/cleansing fluid.

As shown in Fig. 4 it is possible to assemble several pallets 1 into a support cage 20 which may contain up to one thousand or more contact lens products each contained in its own set of mould portions. It will be appreciated therefore that very large numbers of lenses may be first hydrated by immersion in tank of hydration fluid and then transferred to and immersed into a tank 24 of cleaning fluid. Alternatively the support case and the lens products may be subjected to a continuous and simultaneous hydration and cleaning process whereby water is pumped through the tank containing the lens so as to hydrate the lenses and to clean them in a single continuous process. By rotating and translating the cage 20 any air in the mould portions or between the pallets may be simply and effectively expelled.

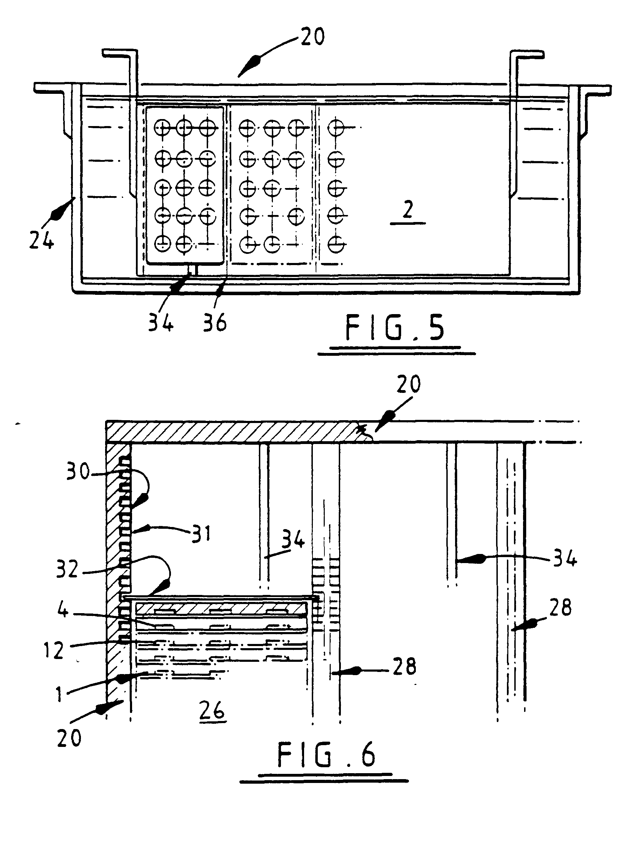

Fig. 5 shows a second embodiment of support cage, indicated by like reference number 20, immersed in a tank 24 of hydrating/cleaning fluid 2. In more detail and with reference to Fig. 6 the support pallets 1 are stacked one on top of each other in stacks 26 spaced apart by dividers 28 between the adjacent stacks 26. At the top portion 30 of each divider 28 are a number of slots 31 into which a retaining plate 32 is fitted so as to hold the stack 26 of pallets 1 together. The cage 20 is provided with support straps 34 on its rear side 36 to retain the stack 26 together so that when the cage 20 is immersed into the tank of hydrating/cleansing fluid 2 on its rear side 36, all the pallets 1 are retained. The arrangement of the pallets allows for the spaced apart male and female mould portions 4, 12 and the hydrated lens contained inside to be immersed into the hydrating/cleansing liquid 2 on their side and allows for any air bubbles to escape and for the hydrating/cleansing fluid 2 to penetrate into all the apertures 8 between the male and female mould portions without the requirement to rotate and translate the cage as with the embodiment in Fig. 4.

It will further be appreciated that by handling the lens products in a single discrete cage the lenses may be subjected to other processes such as treatment with high temperature fluid or specific chemical treatments or for autoclaving and sterilization. Moreover by having a single discrete cage holding large numbers of lens products the possibility of mass production using "continuous process" manufacturing techniques using automation is facilitated.

## Claims

1. A method for the hydration and cleaning of hydrophillic moulded products, such as contact lenses (10), moulded between at least two mould portions (4,12), with hydration fluid and the removal of said hydration fluid therefrom which method comprises the steps of:-
- providing a moulded product (10) held in between the mould surfaces (6,14) of said at least two mould portions (4, 12) ;
- separating said at least two mould portions (4,12) so that said product (10) is held on the mould surface (6,14) of one of said at least two mould portions (4,12);
- providing support means (1) formed and arranged for supporting said at least two mould portions in spaced apart opposed proximity relative to each other so as to captively contain a said product (10) in a product holding space (16) defined therebetween and to define a fluid passage means therebetween for substantially unobstructed flow of fluid through said product holding space (16);
- introducing hydration fluid into said product holding space (16) so as to hydrate said moulded product (10), the hydrated product (10) being captively retained in said product holding space (16); and
- introducing cleaning fluid (2) into said product holding space (16) so as to substantially flush said product holding space (16) and said moulded product (10) of said hydration fluid and any contaminants contained therein.

2. A method according to claim 1 which includes an additional step, following separation of said at least two mould portions (4,12), of removing any flashing between said mould portions, prior to supporting said mould portions (4,12) on said support means (1).

3. A method according to claim 1 or claim 2 wherein said steps of introducing hydration fluid and introducing cleaning fluid (2) are performed simultaneously, said cleaning fluid (2) being said hydration fluid (2).

4. A method according to any one of claims 1 to 3 wherein said moulded product (10) is held between a first mould portion of said at least two mould portions (4,12) having a male mould surface (6) and a second mould portion having a female mould surface (14).

5. A method according to any one of claims 1 to 3 wherein said moulded product is held between two mould portions each having a female mould surface.

6. A method according to any one of claims 1 to 5 wherein said step of providing support means includes the step of providing a flange portion (19) at the upper end of each said first and second mould portions (4,12), said flange portion (19) being formed and arranged for engagement with said support means (1) for support of the respective mould portions.

7. A method according to any one of claims 1 to 6 which includes the additional step, following providing support means (1), of supporting a plurality of said support means (1) for supporting a multiplicity of said at least two mould portions (4,12) in a support structure (20), prior to introducing hydration/cleaning fluid (2) into said product holding spaces (16).

8. A mould support means (1) for use in the method according to any one of the preceding claims which mould support means (1) comprises at least one support member formed and arranged for supporting at least two mould portions (4,12) in spaced apart opposed proximity relative to each other so as to captively contain a moulded product (10) in a product holding space (16) defined between said mould portions (4,12) so supported.

9. A support means according to claim 8 wherein said spacing apart of said at least two mould portions as measured from the underside of the base of a second mould portion (12) to the top surface or flange portion of a first mould portion (4) does not exceed 1mm.

10. A support means according to claim 8 or claim 9 wherein said support member (1) is in the form of a tray having a plurality of spaced apart apertures (8) formed and arranged for receiving a corresponding plurality of said mould portions (4, 12).

11. A support means according to any one of claims 8 to 10 wherein said support members (1) are formed and arranged so as to be stackable one on top of another and in side-by-side arrangement within a support structure (20).

12. A support means according to any one of claims 8 to 10 wherein said support member (1) has a substantially planar upper surface (23) and a castellated underside (20a) surface formed and arranged such that when a first support member (1a) is placed on the upper surface (23) of a second support member (1b) there is defined therebetween a plurality of fluid conduits (22) formed and arranged to allow a substantially unobstructed flow of fluid (2) into product holding spaces (16) defined between opposed mould portions (4,12) supported thereby.

13. A support means according to claim 12 wherein said castellated underside (20a) surface of one support member has a contact area with the upper substantially planar surface of another support member (1b) not exceeding 70% of the total surface area of said planar surface (23) thereof.

14. A support means according to any one of claims 10 to 13 wherein said apertures (8) have a relief chamfer (17) on the upper surface (23) of said support member.

## Patentansprüche

1. Verfahren zum Hydratisieren und Reinigen von hydrophilen Formartikeln, wie beispielsweise Kontaktlinsen (10), die zwischen wenigstens zwei Formabschnitten (4, 12) geformt werden, mit Hydratisierungsfluid und zum Entfernen des Hydratisierungsfluids von diesen, wobei das Verfahren die folgenden Schritte aufweist:
Bereitstellen eines Formartikels (10), der zwischen den Formoberflächen (6, 14) von wenigstens zwei Formabschnitten (4, 12) gehalten wird,
Trennen der wenigstens zwei Formabschnitte (4, 12), so daß der Artikel (10) auf der Formoberfläche (6, 14) eines der wenigstens zwei Formabschnitte (4, 12) gehalten wird,
Bereitstellen von Auflagemitteln (1), die für die Auflage der wenigstens zwei Formabschnitte in einem gegenüberliegenden, geringen Abstandsverhältnis zueinander ausgeformt und angeordnet sind, so daß sie den Artikel (10) unverlierbar in einem Artikelhalteraum (16) halten, der zwischen diesen definiert wird, und daß sie zwischen sich Fluid-Durchgangsmittel für einen im wesentlichen unbehinderten Fluß des Fluids durch den Artikelhalteraum (16) definieren,
Einführen von Hydratisierungsfluid in den Artikelhalteraum (16), um so den Formartikel (10) zu hydratisieren, wobei der hydratisierte Artikel (10) unverlierbar in dem Artikelhalteraum (16) gehalten wird, und
Einrühren von Reinigungsfluid (2) in den Artikelhalteraum (16), um so das Hydratisierungsfluid und jedwede darin enthaltenen Verunreinigungen aus dem Artikelhalteraum (16) und von dem Formartikel (10) abzuspülen.

2. Verfahren nach Anspruch 1, das im Anschluß an die Trennung der wenigstens zwei Formabschnitte (4, 12) den zusätzlichen Schritt der Entfernung jedweden Abfalls zwischen den Formabschnitten (4, 12) einschließt, bevor die Formabschnitte (4, 12) auf die Auflagemitteln (1) aufgelegt werden.

3. Verfahren nach Anspruch 1 oder Anspruch 2, bei dem die Schritte des Einführens von Hydratisierungsfluid und des Einführens von Reinigungsfluid (2) gleichzeitig ausgeführt werden, wobei das Reinigungsfluid (2) das Hydratisierungsfluid (2) ist.

4. Verfahren nach einem der Ansprüche 1 bis 3, bei dem der Formartikel (10) zwischen einem ersten Formabschnitt der wenigstens zwei Formabschnitte (4, 12), der eine Patritzen-Formoberfläche (6) hat, und einem zweiten Formabschnitt, der eine Matrizen-Formoberfläche (14) hat, gehalten wird.

5. Verfahren nach einem der Ansprüche 1 bis 3, bei dem der Formartikel zwischen zwei Formabschnitten gehalten wird, die beide eine Matrizen-Formoberfläche haben.

6. Verfahren nach einem der Ansprüche 1 bis 5, bei dem der Schritt des Bereitstellens von Auflagemitteln den Schritt des Bereitstellens eines Flanschabschnitts (19) am oberen Ende jedes der ersten und zweiten Formabschnitte (4, 12) einschließt, wobei der Flanschabschnitt (19) für den Eingriff mit den Auflagemitteln (1) für die Auflage der entsprechenden Formabschnitte ausgeformt und angeordnet ist.

7. Verfahren nach einem der Ansprüche 1 bis 6, das nach dem Bereitstellen der Auflagemittel (1) den zusätzlichen Schritt des Auflegens einer Vielzahl der Auflagemittel (1) für die Auflage einer Vielzahl der wenigstens zwei Formabschnitte (4, 12) in einer Auflagestruktur (20) einschließt, bevor das Hydratisierungs-/Reinigungsfluid (2) in die Artikelhalteräume (16) eingeführt wird.

8. Formauflagemittel (1) für den Einsatz im Verfahren nach einem der vorhergehenden Ansprüche, wobei die Formauflagemittel(1) wenigstens ein Auflageelement aufweisen, das für die Auflage von wenigstens zwei Formabschnitten (4, 12) in einem gegenüberliegenden, geringen Abstandsverhältnis zueinander ausgeformt und angeordnet ist, so daß sie einen Artikel (10) unverlierbar in einem Artikelhalteraum (16) halten, der zwischen den so aufgelegten Formabschnitten (4, 12) definiert wird.

9. Auflagemittel nach Anspruch 8, bei denen der Abstand zwischen den wenigstens zwei Formabschnitten, gemessen von der Unterseite der Basis eines zweiten Formabschnitts (12) bis zur oberen Fläche oder zum Flanschabschnitt eines ersten Formabschnitts (4), 1 mm nicht übersteigt.

10. Auflagemittel nach Anspruch 8 oder Anspruch 9, bei denen das Auflageelement (1) die Form eines Tabletts hat, in dem eine Vielzahl von mit Zwischenraum angeordneten Öffnungen (8) gebildet und angeordnet wird, um eine entsprechende Vielzahl der Formabschnitte (4, 12) aufzunehmen.

11. Auflagemittel nach einem der Ansprüche 8 bis 10, bei denen die Auflageelemente (1) so ausgeformt und angeordnet sind, daß sie innerhalb einer Auflagestruktur (20) übereinander und nebeneinander gestapelt werden können.

12. Auflagemittel nach einem der Ansprüche 8 bis 10, bei denen das Auflageelement (1) eine im wesentlichen ebene obere Fläche (23) und eine durchbrochene Unterseiten-Oberfläche (20a) hat, die derartig ausgeformt und angeordnet sind, daß durch das Aufsetzen eines ersten Auflageelements (1a) auf die obere Fläche (23) eines zweiten Auflageelements (1b) zwischen diesen eine Vielzahl von Fluidrinnen (22) definiert wird, die so geformt und angeordnet sind, daß sie einen im wesentlichen unbehinderten Fluß des Fluids (2) in die Artikelhalteräume (16) zulassen, die zwischen gegenüberliegenden Formabschnitten (4, 12) definiert werden, die darauf aufgelegt worden sind.

13. Auflagemittel nach Anspruch 12, bei denen die durchbrochene Unterseiten-Oberfläche (20a) eines Auflageelements eine Kontaktfläche mit der oberen, im wesentlichen ebenen Oberfläche eines anderen Auflageelements (1b) hat, die 70% der Gesamtfläche von dessen ebener Oberfläche (23) nicht übersteigt.

14. Auflagemittel nach einem der Ansprüche 10 bis 13, bei denen die Öffnungen (8) eine Entlastungsfase (17) an der oberen Fläche (23) des Auflageelements haben.

## Revendications

1. Procédé d'hydratation et de nettoyage de produits moulés hydrophiles, par exemple de lentilles de contact (10), moulés entre au moins deux parties d'un moule (4, 12), avec un fluide d'hydratation, ledit fluide d'hydratation en étant ensuite éliminé, le procédé comprenant les étapes ci-dessous:
fourniture d'un produit moulu (10) retenu entre les surfaces de moulage (6, 14) desdites au moins deux parties du moule (4, 12);
séparation desdites au moins deux parties du moule (4, 12), de sorte que ledit produit (10) est retenu sur la surface du moule (6, 14) de l'une desdites au moins deux parties du moule (4, 12);
fourniture d'un moyen de support (1), formé et agencé de sorte à supporter lesdites au moins deux parties du moule de manière espacée et à proximité opposée, de sorte à retenir de manière captive un dit produit (10) dans un espace de retenue du produit (16) défini entre elles et à définir un moyen de passage de fluide entre elles pour permettre un écoulement pratiquement libre du fluide à travers ledit espace de retenue du produit (16);
introduction de fluide d'hydratation dans ledit espace de retenue du produit (16) de sorte à hydrater ledit produit moulé (10), le produit hydraté (10) étant retenu de manière captive dans ledit espace de retenue du produit (16); et
introduction de fluide de nettoyage (2) dans ledit espace de retenue du produit (16), de sorte à éliminer pratiquement par rinçage ledit fluide d'hydratation et de quelconques contaminants contenus dans celui-ci dudit espace de retenue du produit (16) et dudit produit moulé (10).

2. Procédé selon la revendication 1, englobant une étape additionnelle, après la séparation desdites au moins deux parties du moule (4, 12), d'élimination de quelconques bavures entre lesdites parties du moule avant de supporter lesdites parties du moule (4, 12) sur ledit moyen de support (1).

3. Procédé selon les revendications 1 ou 2, dans lequel lesdites étapes d'introduction de fluide d'hydratation et d'introduction de fluide de nettoyage (2) sont effectuées simultanément, ledit fluide de nettoyage (2) constituant ledit fluide d'hydratation (2).

4. Procédé selon l'une quelconque des revendications 1 à 3, dans lequel ledit produit moulé (10) est retenu entre une première partie du moule desdites au moins deux parties du moule (4, 12) comportant une surface de moule mâle (6) et une deuxième partie du moule comportant une surface de moule femelle (14).

5. Procédé selon l'une quelconque des revendications 1 à 3, dans lequel ledit produit moulé est retenu entre les deux parties du moule, comportant chacune une surface de moule femelle.

6. Procédé selon l'une quelconque des revendications 1 à 5, dans lequel ladite étape de fourniture du moyen de support englobe l'étape d'agencement d'une partie de bride (19) au niveau de l'extrémité supérieure de chaque dite première et deuxième partie du moule (4, 12), ladite partie de bride (19) étant formée et agencée de sorte à s'engager dans ledit moyen de support (1) pour assurer le support des parties respectives du moule.

7. Procédé selon l'une quelconque des revendications 1 à 6, englobant l'étape additionnelle, après la fourniture du moyen de support (1), de support de plusieurs desdits moyens de support (1) pour assurer le support de multiples desdites au moins deux parties du moule (4, 12) dans une structure de support (20) avant d'introduire un fluide d'hydratation/de nettoyage (2) dans lesdits espaces de retenue du produit (16).

8. Moyen de support de moule (1) destiné à être utilisé dans le procédé selon l'une quelconque des revendications précédentes, ce moyen de support du moule (1) comprenant au moins un élément de support formé et agencé de sorte à supporter au moins deux parties du moule (4, 12) dans une relation espacée et à proximité opposée, de sorte à retenir de manière captive un produit moulé (10) dans un espace de retenue du produit (16) défini entre lesdites parties du moule (4, 12) ainsi supportées.

9. Moyen de support selon la revendication 8, dans lequel ledit espacement desdites au moins deux parties du moule, mesuré du côté inférieur de la base d'une deuxième partie du moule (12) vers la surface supérieure ou partie de bride d'une première partie du moule (4) n'est pas supérieur à 1 mm.

10. Moyen de support selon les revendications 8 ou 9, dans lequel ledit élément de support (1) a la forme d'un plateau comportant plusieurs ouvertures espacées (8) formées et agencées de sorte à recevoir une pluralité correspondante desdites parties du moule (4, 12).

11. Moyen de support selon l'une quelconque des revendications 8 à 10, dans lequel lesdits éléments de support (1) sont formés et agencés de sorte à pouvoir être empilés l'un sur l'autre et dans un agencement juxtaposé dans une structure de support (20).

12. Moyen de support selon l'une quelconque des revendications 8 à 10, dans lequel ledit élément de support (1) comporte une surface supérieure pratiquement plane (23) et une surface inférieure crénelée (20a) formée et agencée de sorte que lors de l'agencement d'un premier élément de support (1a) sur la surface supérieure (23) d'un deuxième élément de support (1b), plusieurs conduits de fluide (22) sont définis entre elles, formés et agencés de sorte à permettre un écoulement pratiquement libre du fluide (2) dans les espaces de retenue du produit (16) définis entre les parties du moule opposées (4, 12) ainsi supportées.

13. Moyen de support selon la revendication 12, dans lequel ladite surface inférieure crénelée (20a) d'un élément de support comporte une aire en contact avec la surface supérieure pratiquement plane d'un autre élément de support (1b) ne représentant pas plus de 70% de l'aire de surface totale de ladite surface plane correspondante (23).

14. Moyen de support selon l'une quelconque des revendications 10 à 13, dans lequel lesdites ouvertures (8) comportent un chanfrein de dégagement (17) sur la surface supérieure (23) dudit élément de support.
